Europäisches Patentamt

European Patent Office

Office européen des brevets

(19)

(11)     EP 0 708 274 B1

(12)     **EUROPEAN PATENT SPECIFICATION**

(45) Date of publication and mention
of the grant of the patent:
**02.11.2000   Bulletin 2000/44**

(51) Int Cl.⁷: **F16H 21/18**, F16C 3/22

(86) International application number:
**PCT/JP95/00362**

(21) Application number: **95910752.5**

(22) Date of filing: **06.03.1995**

(87) International publication number:
**WO 95/30847 (16.11.1995 Gazette 1995/49)**

(54) **CRANK DEVICE AND MACHINE DEVICE**

KURBELGETRIEBE UND MASCHINE

DISPOSITIF A MANIVELLE ET DISPOSITIF DE MACHINE

(84) Designated Contracting States:
**DE ES FR GB IT**

(30) Priority:   **10.05.1994   JP   12177694**

(43) Date of publication of application:
**24.04.1996   Bulletin 1996/17**

(73) Proprietor: **LONGWELL JAPAN CO., LTD.**
**Osaka-shi, Osaka 555 (JP)**

(72) Inventors:
• **TAKACHI, Ken, Longwell Japan Co., Ltd.**
**Osaka-shi, Osaka 555 (JP)**
• **OGAI, Shuji, Longwell Japan Co., Ltd.**
**Osaka-shi, Osaka 555 (JP)**

(74) Representative: **Hillier, Peter et al**
**Reginald W. Barker & Co.,**
**Cliffords Inn**
**Fetter Lane**
**London EC4A 1BY (GB)**

(56) References cited:
FR-A- 1 519 699          FR-A- 2 034 244
JP-A- 63 284 085          JP-B- 62 046 744

• PENTON IMC, CLEVELAND USA:
"Counterweighed Gear Damps Engine Vibes"
MACHINE DESIGN, vol. 46, no. 2, 24 January
1974, XP002048965

## Description

TECHNICAL FIELD

This invention relates to a cramp device, and more particularly, to a power conversion technique applied to a power converting part for converting a reciprocating motion into a rotary motion, or vice versa, in steam engines, internal combustion engines, compressors and pumps.

TECHNICAL BACKGROUND

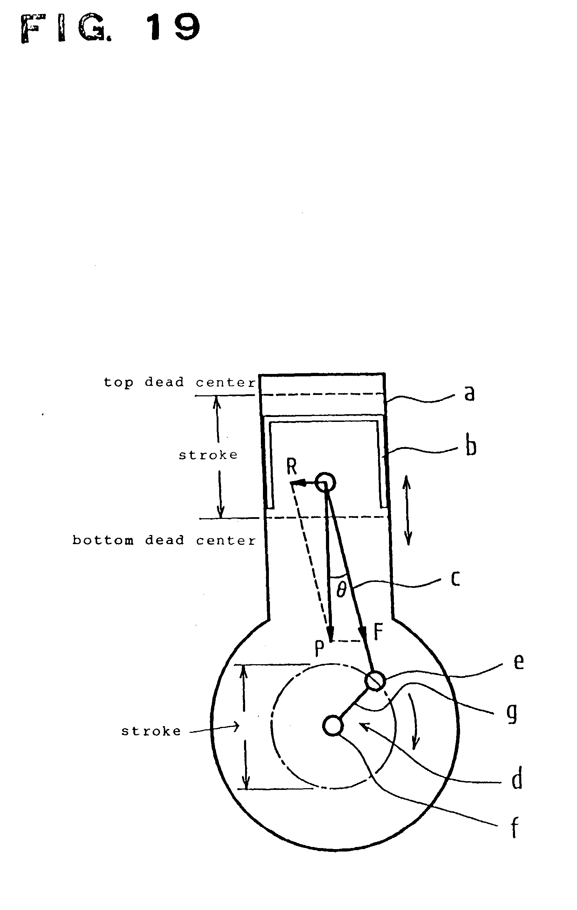

Examples of machinery utilizing the above crank device includes a reciprocating gasoline engine as shown in Fig. 19.

This engine is a typical example of machinery in which a reciprocating motion is converted into a rotation motion. In this machinery, a piston b disposed within a cylinder a being a sealed container is connected, through a connecting rod (con'rod) c, to a crank pin e of a crankshaft.

The piston b is reciprocally moved along a straight line between the top dead center and the bottom dead center, by reason of an explosion force of gasoline to be combusted within a combustion chamber in the cylinder a. The rectilinear reciprocating motion is converted, through the con'rod c into a continuous rotational motion of the crankshaft d.

A reciprocating gasoline engine is advantageous in that, for example, it is of a simple and light weight construction, and provides high speed operation. Thus, the reciprocating gasoline engine is still main equipment for an automobile engine, notwithstanding the fact that it is over more than 200 years since the principle of a steam engine has been devised. It is noted, however, that the reciprocating gasoline engine involves the following problems in relation to the constructional features of the crankshaft d.

Specifically, and as shown in the drawing, the crank pin e is offset from the center of rotation of the crankshaft d, i. e., the axis of the main shaft f, a distance corresponding to the length of the crank arm g. Thus, the con'rod c is moved up and down, together with the piston b, while oscillating or moving laterally in the left-hand and right-hand direction. Accordingly, the reciprocating motion and the rotating motion, which are the basic motion of the crank device, are combined with the lateral oscillating motion in a complicated manner, so that the dynamic balance becomes very unstable.

In order to eliminate the above problem, various counter-measures have been employed, in terms of weight, configuration, and point of attachment of each of the counter weights (counter balancers), in an effort to achieve the dynamic balance of the moving portion including the piston b and the con'rod c. It is noted, however, that such counter-measures are very difficult to be performed. In reality, it is possible for the rotating mass to be corrected for, but impossible for the reciprocating mass to be corrected for. Accordingly, the next best counter-measure is actually employed so as to reduce the dynamic unbalance. The resultant unbalanced inertial force of the moving portion causes significant vibrations and noises.

As mentioned above, the con'rod c is oscillated laterally so as to be inclined (angle of inclination ; θ) relative to the reciprocating direction of the piston b. Thus, thrust force (lateral pressure) R due to the gas pressure and inertial force is applied to the piston b, so that the piston strikes the cylinder a (piston slap). This also constitutes main factor for causing hindrances, such as vibrations, noises, cavitation, and friction loss.

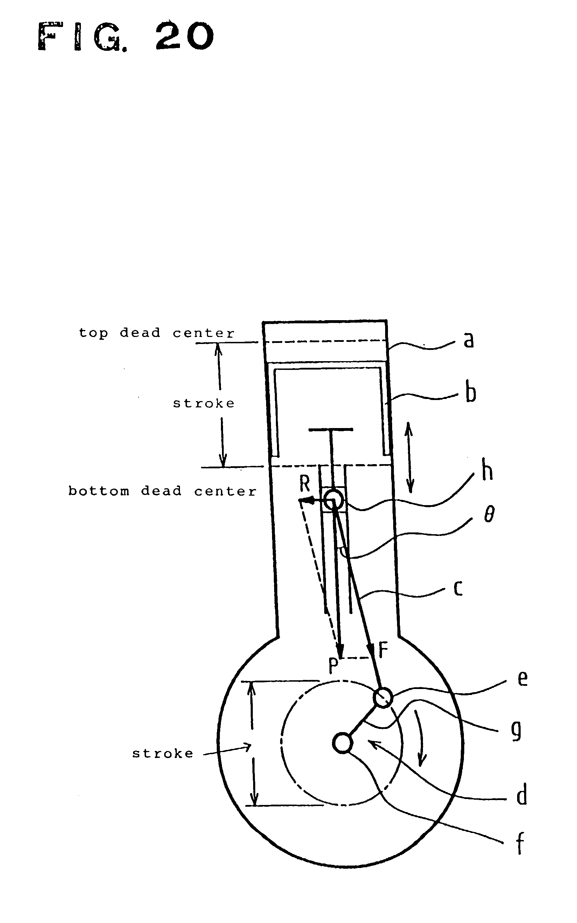

The above problems are particularly found in super-large sized diesel engines. In order to avoid the problems, a crosshead system as shown in Fig. 20 is usually employed. In this construction, a crosshead h is disposed between the piston b and the con'rod c. The crosshead is slidably movable in the reciprocal direction of the piston b, so as to eliminate thrust force R tending to acting on the piston b. This counter-measure does not eliminate the above problem completely. Rather, it requires a cylinder a of an increased height, and an engine of a large size.

In addition above, special constructions have been developed by employing, for example, a conventional offset cylinder, multi-cylinder, silent shaft configuration, or rhombic mechanism, in an effort to eliminate vertical vibrations due to the reciprocating motion of the piston b, lateral oscillation due to the inclination of the con'rod, or vibrations upon explosion of fuel.

It is noted, however, that, for example, it is impossible to obtain a completely stable dynamic balance in the silent shaft construction. Further, and in the rhombic mechanism, although it is possible to obtain a stable dynamic balance, the reciprocating portion is increased in its total weight, since the reciprocating portion is provided with a counter balancer acting in the direction opposite to the reciprocating direction thereof, so that it is not suitable for high speed operation.

It is also noted that the main parts including the piston b, con'rod c, or the crankshaft d are required to have sufficient mechanical strength or rigidity, in order to withstand the unbalanced inertial force of the moving portion. This leads to increase in the machine weight and reduction in power transmission efficiency.

The above problems are commonly found in other machinery including a crank device as well as internal combustion engines, including the reciprocating engine, which may include a steam engine, a compressor, and a pump.

It is an object of the invention to provide a crank device and machinery including such crank device, the crank device having increased power transmission efficiency and stable dynamic balance, being capable of converting a rectilinear reciprocating motion into a continuous rotating motion, or vice versa, being suitable for high speed operation, and being of a simple and compact construction.

A crank device for converting a reciprocating motion into a rotating motion, or vice versa in accordance with the features of the preamble of claim 1 is disclosed in Penton IMC, Cleveland USA:"Counterweighed Gear Damps Engine Vibes" Machine Design, vol. 46, no. 2, 24.1.1974, XP002048965. Similar device are also disclosed in FR-A-2034244 and FR-A-1519699.

The invention is characterised in that the circumferential engagement position between said planetary member and said sun member is adjustable.

Preferably, all of the counter balances for the constructive members are adapted to exert a rotational, inertial force.

Machinery according to the invention comprises at least one set of the above crank device. The opposite end of the connecting rod is connected to the reciprocating portion constituting the input side, while the main shaft of the crankshaft is connected to the rotating portion constituting the output side. Conversely, the main shaft of the crankshaft may be connected to the rotating portion constituting the input side, while the opposite end of the connecting rod is connected to the reciprocating portion constituting the output side.

Foe example, when the crank device is applied to a reciprocating gasoline engine, a piston within the cylinder is connected, through a connecting rod and a planetary mechanism, to a crank pin. The piston is reciprocally moved along a straight line between the top dead centre and the bottom dead centre, by reason of explosion force of gasoline to be combusted in a combustion chamber of the cylinder. The reciprocal linear motion is converted into a continuous rotating motion by means of the connecting rod and the planetary mechanism and transmitted to the crankshaft.

In the above case, the sun member of the planetary mechanism is arranged in concentric with the rotational center of the crankshaft. The crank pin of the crankshaft is pivotably and rotatably connected to the rotational center of the planetary member which rolls along the inner periphery of the sun gear. One end of the connecting rod is pivotably and rotatably connected to the outer peripheral portion of the planetary member. Thus, the connecting rod does not oscillate or move laterally in substance, so that it is moved, together with the piston, substantially along a linear line in which the piston is reciprocated. Accordingly, stable dynamic balance is maintained.

It is particularly noted that the length of the crank arm of the crankshaft may be designed to be equal to the distance from the rotational center of the planetary member to the connection point on the connecting rod. The connection point is adapted to be moved along a straight line passing through the rotational center of the crankshaft, in accordance with the rolling and rotation of the planetary member. Thus, no oscillation is caused to the connecting rod, so that the connecting rod does not move laterally at all. Thus, thrust force otherwise acting on the piston is completely prevented.

The planetary member is so arranged to encircle the sun member, so that rotational inertial force from the planetary member may be surely received by the sun member. This also contributes to maintaining stable dynamic balance, as well as closely engaged state between the planetary member and the sun member. Accordingly, power transmission efficiency may be increased.

The mass distribution among the constructive members is selected considering the dynamic balance about the rotational center of the crankshaft, so that uniform and stable operation may be obtained in a wide range from low speed to high speed output. In this regard, the present device is applicable not only to a power conversion device for converting a reciprocating motion into a rotating motion in an internal combustion engine, a reciprocating gasoline engine for example, or a steam engine, but also to a power conversion device for converting a rotating motion into a reciprocating motion in a compressor or a pump, by employing a reversed construction, i.e., by connecting the main shaft of the crankshaft to the rotating portion constituting the input side and by connecting the opposite end of the connecting rod to the reciprocating portion constituting the output side.

BRIEF DESCRIPTION OF THE DRAWINGS

Fig. 1 is a perspective view, partly in section, showing a basic construction of a crank device ;
Fig. 2 is a front view in section of the basic construction of Fig. 1;
Fig. 3 is a side elevational view in section of the basic construction;
Fig. 4 is a diagrammatic constructional view illustrating dimensional relationship between constructional members of the basic construction;
Fig. 5 is a diagrammatic constructional view illustrating mass distribution for the constructive members of the basic construction;
Fig. 6 is an illustrative view showing the stroke of motion of the basic construction as applied to a reciprocating gasoline engine;
Fig. 7 is a diagram showing the relationship between the angle of rotation of a crankshaft and the stroke of a piston in the basic construction;
Fig. 8 is a cross-sectional view of a basic construction for a horizontal two-cylinder engine, wherein Fig. 8(a) is a sectional plan view, and Fig. 8(b) is a side elevational, sectional view;
Fig. 9 is a cross-sectional view of a basic construction for a horizontal four-cylinder engine, wherein Fig. 9(a) is a sectional plan view, and Fig. 9(b) is a side elevational, sectional view;

Fig. 10 is a diagrammatic view of a basic construction for a V-type two-cylinder engine, wherein Fig. 10 (a) is a side elevational view, Fig. 10(b) is a front elevational view as viewed in the direction of line X-X in Fig. 10(a), and Fig. 10(c) is a front elevational view similar to Fig. 10(b) illustrating a modification in which an output shaft is disposed on one side;

Fig. 11 is a diagrammatic view showing a basic construction for a straight two-cylinder engine, wherein Fig. 11(a) is a side elevational view, and Fig. 11(b) is a front view as viewed in the direction of line XI-XI in Fig. 11(a);

Fig. 12 is a diagrammatic view of a basic construction modified for a straight engine, wherein Fig. 12 (a) is a front elevational, sectional view, Fig. 12(b) is a perspective view showing a pair of adjacently disposed planetary gear and a gear pin of the basic construction, and Fig. 12(c) is a front view of the pair of planetary gear and gear pin;

Fig. 13 is a dyagrammatic constructional view showing a basic construction of a two-cycle cylinder engine;

Fig. 14 is a diagrammatic constructional view showing a basic construction of a four-cycle cylinder engine provided with a mechanical supercharger;

Fig. 15 is a diagrammatic constructional view showing a modified supercharger in the above four-cycle cylinder engine, wherein Fig. 15(a) shows an arrangement in which the position of a fuel injection nozzle is changed, and Fig. 15(b) shows an arrangement including an intercooler;

Fig. 16 is a diagrammatic constructional view showing a basic construction for a single-cylinder compressor;

Fig. 17 is a diagrammatic constructional view showing a basic construction of a two-cylinder compressor;

Fig. 18 is a diagrammatic constructional view showing a basic construction of an fuel injection pump in a diesel engine according to an embodiment of the invention, wherein Fig. 18(a) is a side-elevational, sectional view, Fig. 18(b) is a front view during the maximum stroke, and Fig. 18(c) is a front view during the minimum stroke;

Fig. 19 is a front sectional view of a basic construction of a typical reciprocating gasoline engine provided with a conventional crank device; and

Fig. 20 is a front sectional view of a modified basic construction for a diesel engine provided with a conventional crank device.

BEST MODE FOR CARRYING OUT THE INVENTION

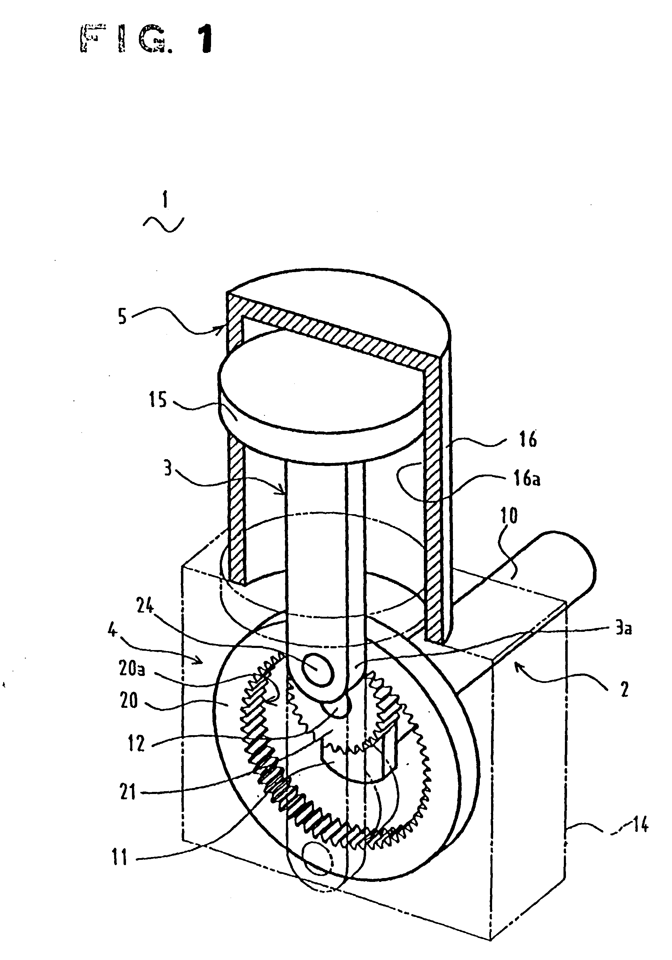

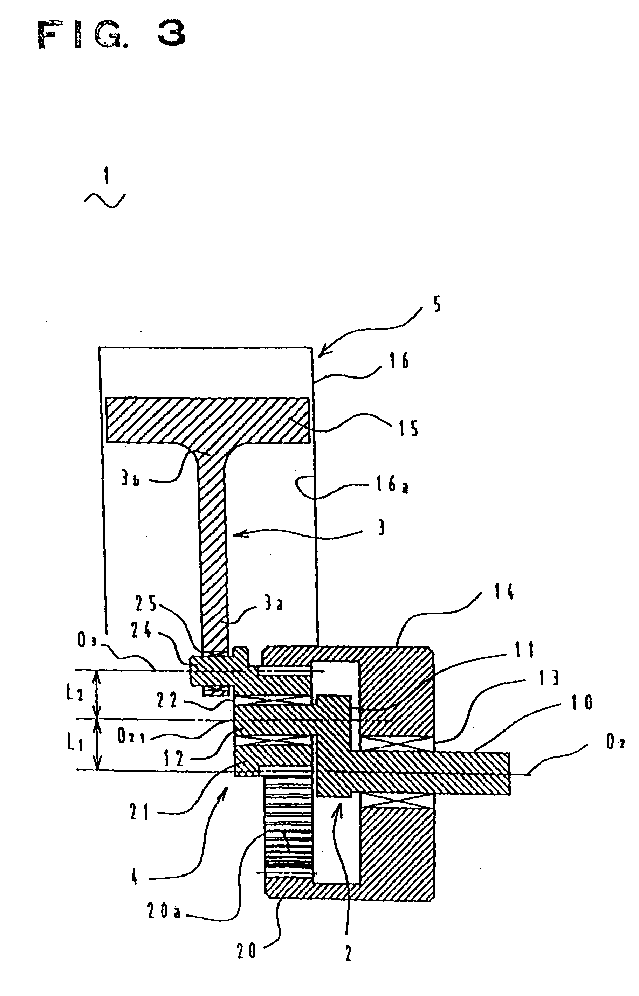

The invention will be explained in detail below with reference to the attached drawings, whereby Fig. 1 to 17, 19 and 20 are not part of the invention.

A basic construction of a crank device is shown in Figs. 1 through 3. The crank device 1, in actual, is a device to be applied to a power conversion part for converting a reciprocating motion into a rotary motion, or vice versa. In the illustrated embodiment, the crank device constitutes the main part of a single-cylinder engine.

The crank device 1 comprises a crankshaft 2, a connecting rod (con'rod) 3, and planetary mechanism 4 disposed between the crankshaft 2 and the connecting rod 3. The connecting rod 3 is connected with a reciprocating cylinder device 5. In the drawings, only a substantial portion of the mechanical driving system is shown, and the peripheral mechanisms such as a valving mechanism in the intake/exhaust system are not shown.

The crankshaft 2 is a part to be connected to the rotating or rotary side. The crankshaft 2 comprises a main shaft 10, a crank arm 11, and a crank pin 12, constructed integrally. The main shaft 10 is rotatably carried by a crankcase 14 through a bearing 13. The axes of the crankshaft 10 and the crank pin 12 are disposed in parallel with each other.

The con'rod 3 is a part to be connected with a piston 15 of the reciprocating cylinder device 5 constituting the reciprocating side. In actual, the con'rod 3 is integrally formed with the piston 15. The con'rod 3, as shown in the drawings, is an elongated bar having a uniform thickness over its entire length. The piston 15 is a thin plate of a circular configuration. The piston 15 is not provided with a skirt portion as found in a conventional, known construction. By this, the weight of the reciprocating portion is reduced. The reduction in weigh is realized in connection with a substantial reduction in the thrust force. It is noted, however, that the invention may be carried out without any inconveniency, even when a reciprocating portion having a weight substantially the same as that of a conventional construction is employed.

As will be explained later, the integral construction of the con'rod 3 and the piston 15 may be employed by the fact that the con'rod 3 is arranged to be moved in a linear reciprocating fashion. It is, of course, possible to employ a construction in which the con'rod 3 and the piston 15 are connected together through a piston pin (not shown) for pivotable movement, in order to accommodate a fabrication tolerance and/or an assemble tolerance, as in the prior art piston/rod.

The planetary mechanism 4 is a part to connect the crankshaft 2 and the con'rod 3 together. The planetary mechanism 4 includes a stationary internal gear 20 of an annular configuration and a planetary gear 21 as an planetary member in mesh with the stationary internal gear 20.

The stationary internal gear 20 is fixedly mounted on the crankcase 14. A sun gear 20a formed in the inner periphery of the stationary internal gear 20 is disposed concentrically with the main shaft 10 of the crankshaft 2.

The planetary gear 21 is meshed with the sun gear 20a and arranged to be rotated about the axis of the planetary gear 21. The crank pin 12 of the crankshaft 2 is pivotably connected at the center of rotation of the planetary gear 21 through the bearing 22 for rotatable movement. A gear pin 24 is provided in the outer periphery of the planetary gear 21. One end 3a of the con'rod 3 is pivotably connected to the gear pin 24 through a bearing 25 for rotatable movement.

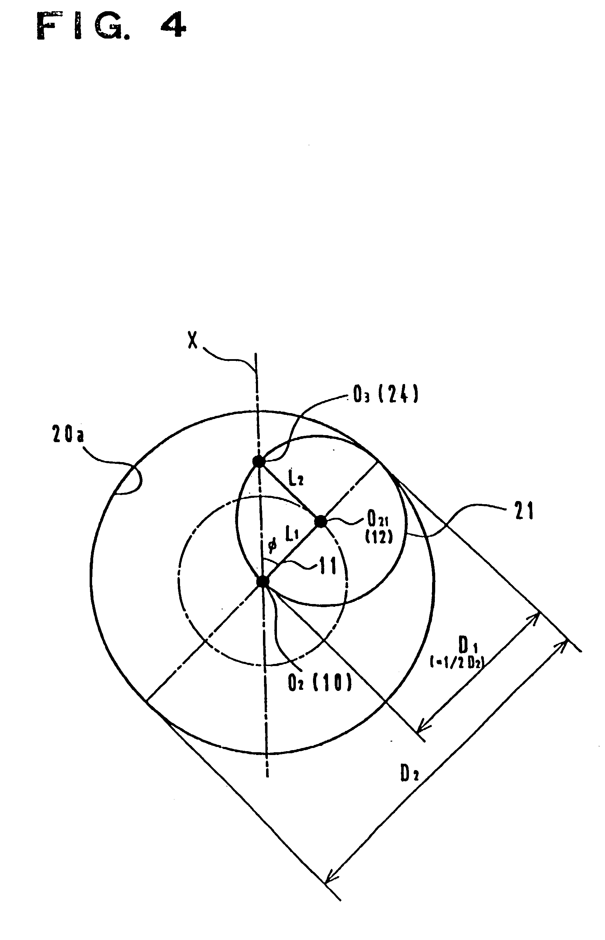

The dimensional relationship as among the above constructive members is shown in Fig. 4. The outer diameter (the pitch circle diameter) D1 of the planetary gear 21 is designed to be one half of the internal diameter (the pitch circle diameter) D2 of the sun gear 20a. In other words, the outer peripheral length of the planetary gear 21 is set at one half of the inner peripheral length of the sun gear 20a.

The length L1 of the crank arm 11 of the crankshaft 2 (the distance from the axis of the main shaft 10 to the axis of the crank pin 12) is designed to be equal to the distance L2 from the center of rotation O21 of the planetary gear 21 (the axis of the crank pin 12) to the connection point O3 of the con'rod 3 (the axis of the gear pin 24). In the illustrated embodiment, the connection point O3 is disposed on the pitch circle of the planetary gear 21.

Thus, when the planetary gear 21 is rotated two times about its axis so as to perform one revolution along the sun gear 20a, the connection point O3 is reciprocally moved along the line passing through the center of rotation O2 of the crankshaft 2 (the axis of the main shaft 10).

In the illustrated arrangement, the opposite end 3b of the con'rod 3 is fixedly connected to the piston 15 at the central position of the lower surface of the piston 15. Thus, the axis X of the piston 15 (coincident with the axis of the cylindrical inner surface 16a of the cylinder 16) passes through the center of rotation O2 of the crankshaft 2. Further, the circumferential engagement position between the planetary gear 21 and the sun gear 20a is so arranged that the locus of movement of the connection point O3 is coincident with the axis X of the piston 15.

In accordance with the rotational movement of the planetary gear 21, the con'rod 3 and the piston 15 are reciprocated linearly in a completely unitary fashion along the line X, i. e., the line passing through the center of rotation O2 of the crankshaft 2, without causing any oscillation (lateral movement). On the other hand, the crankshaft 2 is also rotated about the center of rotation O2 in accordance with the rotational movement of the planetary gear 21.

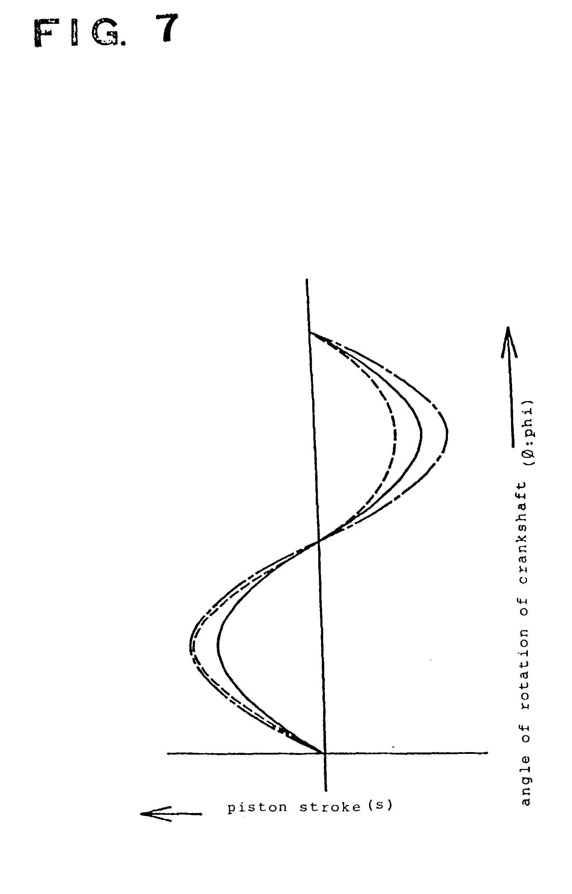

The relationship between the angle of rotation φ of the crankshaft 2 and the stroke S of the piston 15 is represented by a basic form in a sine curve as shown by the solid line in Fig. 7 (the lines in phantom represent the movement of the crank).

The mass distribution among the above constructive members constituting the crank device 1 is determined considering the dynamic balance around the center of rotation O2 of the crankshaft 2, so that the dynamic balance between the reciprocal portion and the rotational portion is achieved. In this regard, it is preferred that all counter balancers provided on the constructional members be arranged to serve as a rotational inertial force.

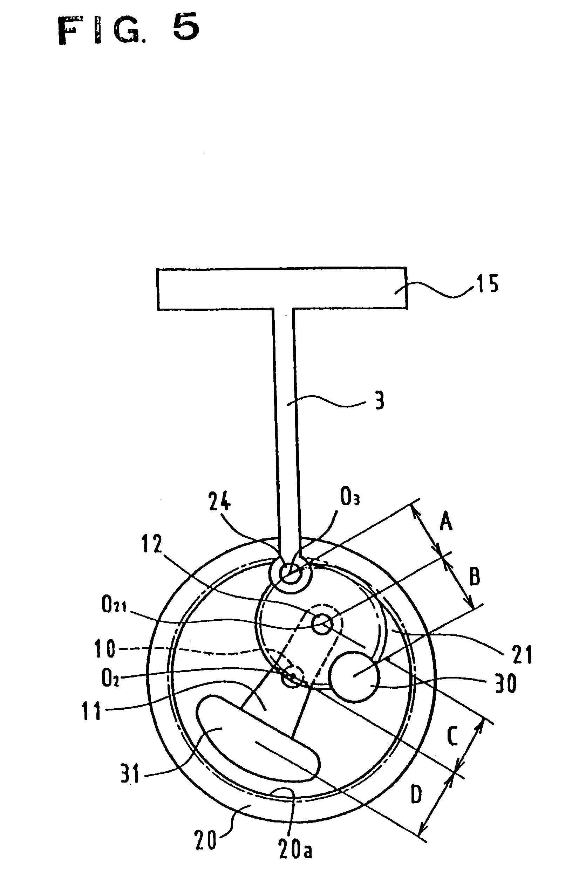

In the illustrated arrangement, the mass distribution is so selected that with referring to Fig. 5 the components on opposite sides of the center of rotation O21 of the planetary gear 21 have equal weight, and that the components of opposite sides of the center of rotation O2 of the crankshaft 2 have equal weight.

Actually, the mass distribution is determined so that the following equations (1) and (2) are satisfied:

$$W1 \times A = W2 \times B \tag{1}$$

$$W3 \times C = W4 \times D \tag{2}$$

wherein, W1 is the mass of the reciprocal portion (piston 15, con'rod 3 and gear pin 24), W2 is the mass of a counter weight (counter balancer) 30 for the above reciprocal portion, A is the distance from the center of rotation O21 of the planetary gear 21 to the gear pin 24, B is the distance from the center of rotation O21 of the planetary gear 21 to the counter balancer 30, W3 is the mass of the rotational portion (the reciprocal portion, planetary gear 21 and counter balancer 30), W4 is the mass of a counter weight (counter balancer) 31 for the rotational portion, C is the distance from the center of rotation O2 of the crankshaft 2 to the center of rotation O21 of the planetary gear 21, and D is the distance from the center of rotation O2 of the crankshaft 2 to the counter weight (counter balancer) 31.

In this regard, it is assumed that the mass balance has been established on opposite sides of the center of rotation O2 with regard for example to the crank arm 11. This assumption is employed in order to derive the above equations in a simple manner. It is noted, however, that the above assumption, of course, does not require that the center of gravity of the crank arm 11 of the actual crank device be in consistent with the center of rotation O2. It is also possible to determine the mass balance using equations similar to the above by employing the total mass W4 of the crank arm 11 and the counter balancer 31, and the distance D between the center of gravity of the crank arm 11 and the counter balancer 31 as a unit and the center of rotation O2.

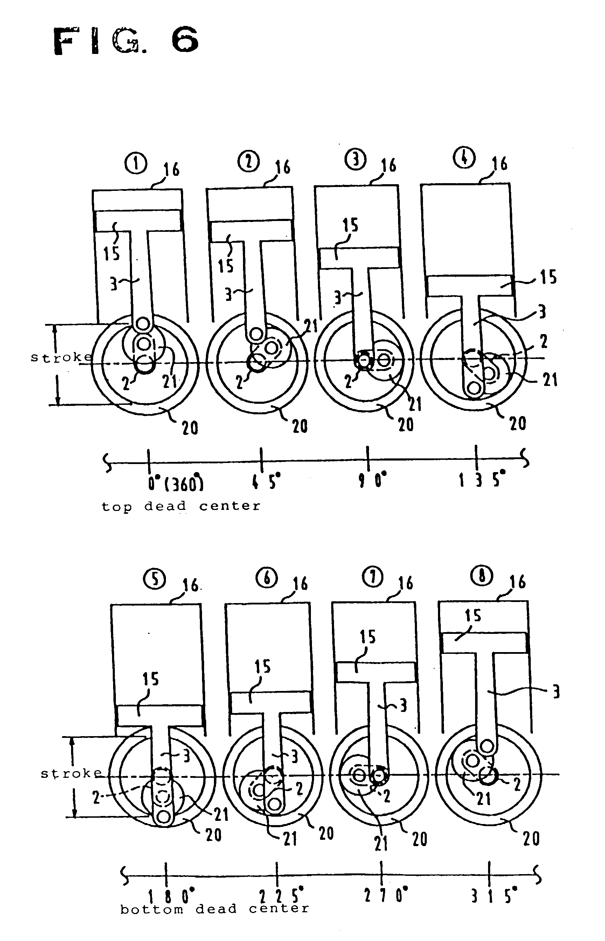

When the thus constructed crank device is applied for example to a reciprocating gasoline engine, the piston 15 is reciprocated in linear fashion between the top dead center and the bottom dead center due to the force of explosion of gasoline combusted within a combustion chamber of the cylinders 16, as shown in Fig. 6.

The resultant movement of the con'rod 3 integral with the piston 15 causes a planetary movement of the planetary mechanism 4. The reciprocal movement of the con'rod 3 is converted into a continuous rotational movement of the crankshaft 2 (in Fig. 6, the cycle is repeated in the sequence of (1) (the angle of rotation $\phi$ of the crankshaft 2 = 0 degree) -> (2) ($\phi$ = 45 degrees) -> (3) ($\phi$ = 90 degrees) -> (4) ($\phi$ = 135 degrees) -> (5) ($\phi$ = 180 degrees) -> (6) ($\phi$ = 225 degrees) -> (7) ($\phi$ = 270 degrees) -> (8) ($\phi$ = 315 degrees) -> (1) ($\phi$ = 360 degrees)).

In this cycle of operation, the con'rod 3 is substantially prevented from moving in the lateral direction (in the left-hand to right-hand direction) by reason of the above construction. Thus, the con'rod 3, completely integral with the piston 15, is reciprocated along the straight line X passing through the center of rotation O2 of the crankshaft 2 (the axis of the piston 15), whereby a stable dynamic balance is maintained.

Since the con'rod 3 is reciprocated along the straight line X (angle of inclination $\theta$ relative to the direction of reciprocal movement of the piston 15 = 0 degree), unbalanced load as experienced in the prior art crank device is completely prevented. Thus, a thrust force R as experienced in the prior art crank device is not applied to the piston 15 at all (see Figs. 19 and 20). Accordingly, piston slap as experienced in machinery employing the prior art cramp device is not caused theoretically. Thus, only a friction force is acted between the cylindrical inner surface 16a of the cylinder 16 and the piston 15, so that problems due to vibration, noise, cavitation, friction loss, etc. are reduced substantially. Accordingly, significant improvement in terms of power transmission efficiency is expected.

The sun gear 20a is disposed so as to encircle the planetary gear 21, so that a rotational, inertial force from the planetary gear 21 is securely received by the sun gear 20a. This contributes to increase in gear efficiency, and, in this regard, a stable dynamic balance is also maintained. The planetary gear 21 and the sun gear 20a are closely inter-engaged with each other by reason of the rotational, inertia force from the planetary gear 21, so that high power transmission efficiency may be obtained.

As stated before, the mass distribution among the constructive members of the crank device 1 is selected considering the dynamic balance about the center of rotation O2 of the crankshaft 2. Especially, all of the counter balancers 30, 31, etc. for the constructive members are designed so as to exert a rotational, inertia force, so that uniform and stable operation may be obtained in an area from low engine speed to high engine speed.

In the crank device 1, bi-directional input/output operation is possible (the input/output direction may be changed). As will be explained below, it is possible for the crank device of the invention not only to serve as a power conversion device for converting a reciprocal movement of an internal combustion engine, such as the above mentioned reciprocating gasoline engine, or a steam engine into a rotational movement, but also to serve as a power conversion device for converting a rotational movement of a compressor or a pump into a reciprocal movement, by employing the opposite construction, i. e., by connecting the main shaft of the crankshaft to the rotational portion serving as an input side, and connecting the opposite end of the con'rod 3 to reciprocal portion serving as an output side.

(1) It is possible to regulate a stroke S of the piston 15 relative to an angle of rotation $\phi$ of the crankshaft 2 by suitably adjusting the distance L2 from the center of rotation O21 of the planetary gear 21 to the connection point O3 of the con'rod 3. By this, the sine curve shown in Fig. 7 may be set at a shape which will be optimum for a motion characteristic of given machinery, such as explosion characteristic of a given fuel. In this case, the con'rod 3 and the piston 15 are pivotably connected with each other by means of a piston pin (not shown). The locus of movement of the con'rod 3 does not represent a linear line as in the illustrated embodiment, but represents an elliptic line adjacent to the above linear line.

For example, when the distance L2 is increased, the top portion and the bottom portion of the sine curve are raised upwardly and downwardly, respectively, so as to represent a steep curve (refer to the dotted line in Fig. 7. Conversely, when the distance L1 is increased, the top portion and the bottom portion of the sine curve are recessed downwardly and upwardly, respectively, so as to represent a gently curve (not shown).

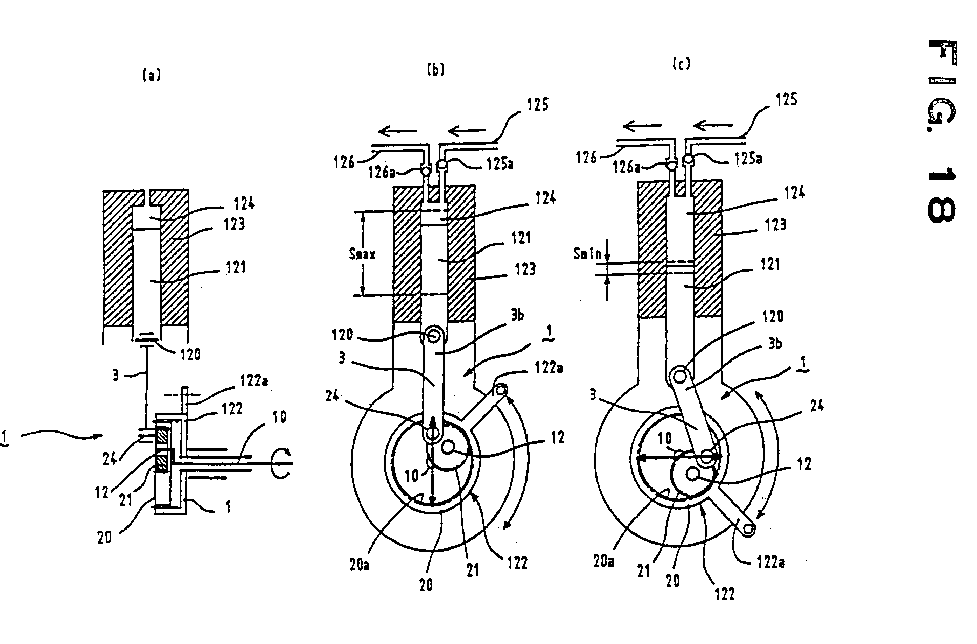

(2) In accordance with the invention, the circumferential engagement position between the planetary gear 21 and the sun gear 20a is made adjustable, so as to adjustably change the stroke S of the piston 15 (refer to Fig.18 below).

Specifically, the stationary internal gear 20 may be mounted on the crankcase 14 so that it is adjustably rotated in the circumferential direction. By this, the circumferential position of the sun gear 20a may be adjustably changed. This permits adjustable regulation of the relative engagement position between the sun gear 20 and the planetary gear 21. In this embodiment, the con'rod 3 and the piston 15 are pivotably connected with each other through a piston pin (not shown), as in the case of (1) in the above.

(3) it is possible to obtain an extremely simple construction, and high power transmission and high power transmission efficiency. Thus a construction specifically optimum to a reciprocating engine wherein the planetary mechanism 4 comprises a stationary internal gear 20 and a planetary gear 21. It is noted, however, that the invention should not be limited to such construction, but another construction provided with similar engagement function may be employed.

Although not shown in the drawings, a combination of a sun member including an annular member provided with a length of chain extending entirely along the cylindrical internal surface thereof in the circumferential direction and a sprocket wheel, as a planetary member, in mesh with the chain, or a combination of a sun gear including an annular member provided with a length of toothed belt extending entirely along the cylindrical internal surface thereof in the circumferential direction and a pulley, as a planetary member, in mesh with the toothed belt (timing belt), for example, may be employed.

(4) While, in the above (3), the cylindrical inner surface of the sun gear and the cylindrical outer surface of the planetary gear are meshed with each other, it is possible for the cylindrical inner surface of the sun gear and the cylindrical outer surface of the planetary gear to be frictionally engaged without any slippage therebetween. This construction is particularly effective in a case in which a small load is transmitted. Actually, for example, the sun gear and the planetary gear are formed from a rubber material, or the engagement surfaces of the sun gear and the planetary gear are formed from a rubber material, so as to obtain a frictional engagement therebetween.

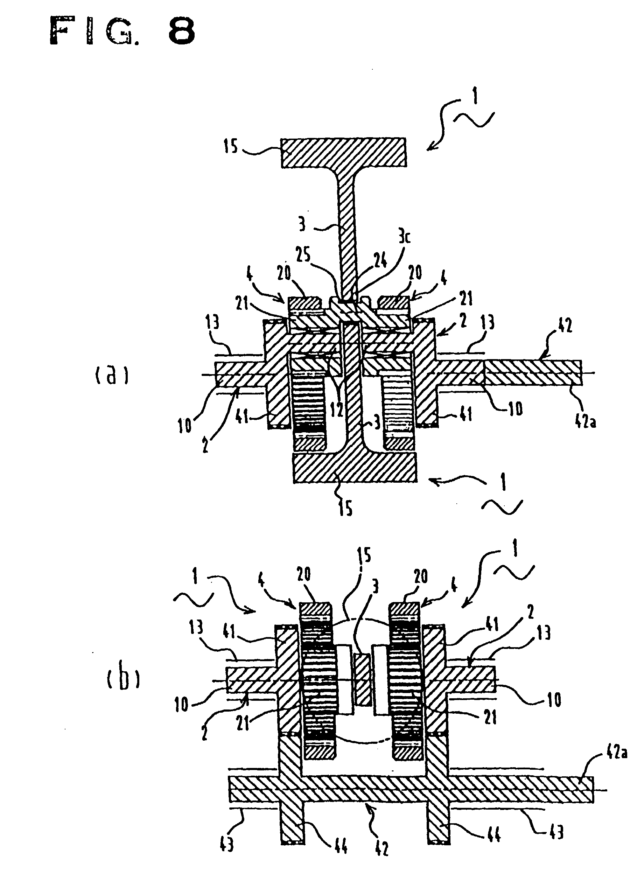

In Fig. 8, two sets of crank device 1, 1 are combined in a horizontally opposed manner so as to form a horizontal, two-cylinder engine.

The basic construction for each of the crank device 1, 1 is substantially the same as that shown in Figure 1. Crankshaft 2, 2 and planetary mechanisms 4, 4 are disposed in horizontally opposed manner. A pair of con'rods 3, 3 are formed in a concentric manner. Specifically, a pair of pistons 15, 15, and the con'rods 3, 3 are formed into a completely integral piece.

In this connection, planetary gears 21, 21 of the planetary mechanisms 4, 4 are unified by means of a common gear pin 24. The central portion 3c of the con'rods 3, 3 is pivotably connected to the gear pin 24 through a bearing 25 for rotatable movement.

The crankshaft 2 is formed by combining a main shaft 10, a drive gear 41, and a crank pin 12 in unison. The drive gear 41 also serves as a crank arm.

An output shaft 42 is disposed in parallel with the crankshafts 2, 2. The output shaft 42 is disposed in parallel with the main shaft 10, 10 of the crankshafts 2, 2. The output shaft 42 is supported by a crankcase (not shown) through bearings 43, 43 for rotatable movement. The output shaft 42 is provided with a pair of driven gears 44, 44 integral therewith. The driven gears 44, 44 are meshed with the drive gears 41, 41 of the crankshafts 2, 2, respectively, so as to perform power transmission therebetween. One end 42a of the output shaft 42 is connected to a rotating output side (not shown).

Thus, the pair of pistons 15, 15 are reciprocated along a straight line by reason of explosion force of gasoline combusted within cylinders (not shown), so that the crankshafts 2, 2 are rotated continuously. The resultant rotational force is transmitted to the output side through the output shaft 42.

Explosion within the cylinders of the pistons 15, 15 is caused alternately in a synchronized manner, so that each power from the pistons 15, 15 is converted into a continuous rotational movement in an effective manner.

The remaining construction and operation of this embodiment are similar to those in the first embodiment.

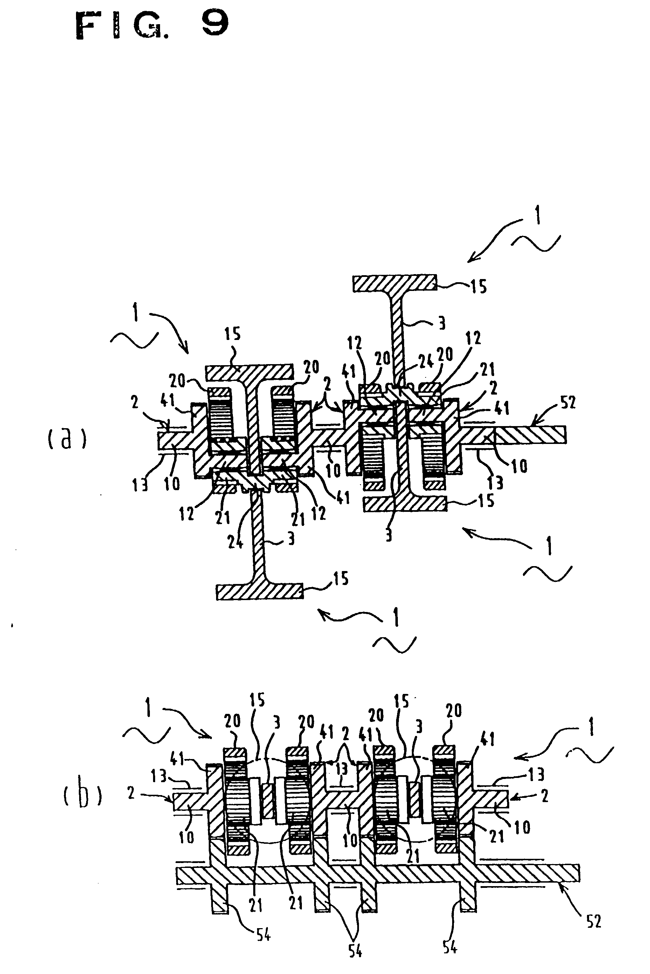

In Fig. 9. two sets of the horizontally opposed two-cylinder engine according to Figure 8 are combined in a side-by-side manner, so as to form a horizontally opposed four-cylinder engine.

A pair of central crankshafts 2, 2 are unified by a common main shaft 10 in a concentric manner. Driven gears 54, 54, ... of an output shaft 52 are meshed with drive gears 41, 41, ... of the crankshafts 2, 2, ..., respectively, so as to perform power transmission therebetween.

The remaining construction and operation are similar to those in Figure 8.

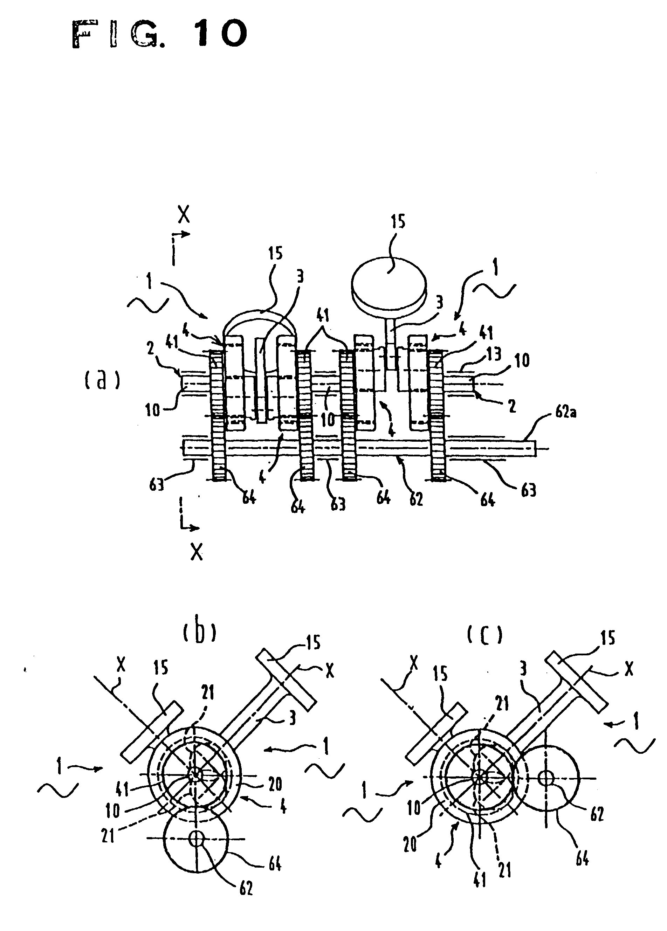

In Fig. 10. two sets of crank device 1, 1 are alternatively arranged at an angle in a V-shaped configuration, so as to form a V-type two-cylinder engine.

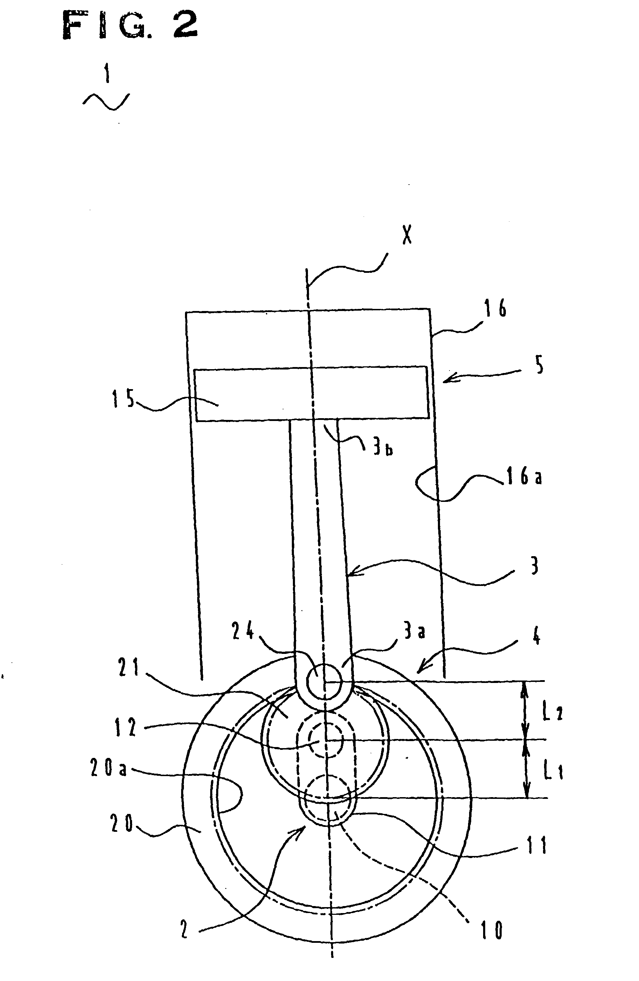

The basic construction for the crank devices 1, 1 is the same as that of Figure 2. Main shafts 10, 10, ... of the crankshafts 2, 2, ... are arranged in a concentric manner.

The crankshaft 2 is formed, as in the case of the second embodiment, by combining the main shaft 10, a driven gear 41 and a crank pin 12 in unison. The drive gear 41 also serves as a crank arm.

An output shaft 62 is disposed below the crankshafts 2, 2 in parallel therewith. The output shaft 62 is arranged in parallel with the main shaft 10 of the crankshaft 2. The output shaft 62 is supported on a crankcase (not shown) through bearings 63, 63 for rotational movement. The output shaft 62 is provided with four driven gears 64, 64, ... integral therewith. The driven gears 64, 64 are meshed with the drive gears 41, 41, ... of the crankshafts 2, 2, ..., so as to perform power transmission therebetween. One end 62a of the output shaft 62 is connected to a rotating output side (not shown).

In the engine as constructed above, a pair of pistons 15, 15, as in the case of Figure 8, are reciprocated along a respective straight line by reason of explosion force of gasoline combusted within cylinders (not shown), so that the crankshafts 2, 2 are rotated in a continuous manner. The resulting rotational force is transmitted through the output shaft 62 to the output side. Explosion within the cylinders of the pistons 15, 15 is alternatively caused in a synchronized manner, so that the power from the pistons 15, 15 is continuously converted into a rotational motion in an effective manner.

The output shaft 62 may be disposed at any position in which the output shaft 62 does not interfere with the pistons 15, 15 and the con'rods 3, 3 constituting a reciprocation portion. For example, and as shown in Fig. 10(c), the output shaft 62 may be disposed on one side of the crankshafts 2, 2, or disposed on the upper side of the crankshafts 2, 2 (not shown).

The remaining construction and operation of this embodiment are similar to those in Figure 1.

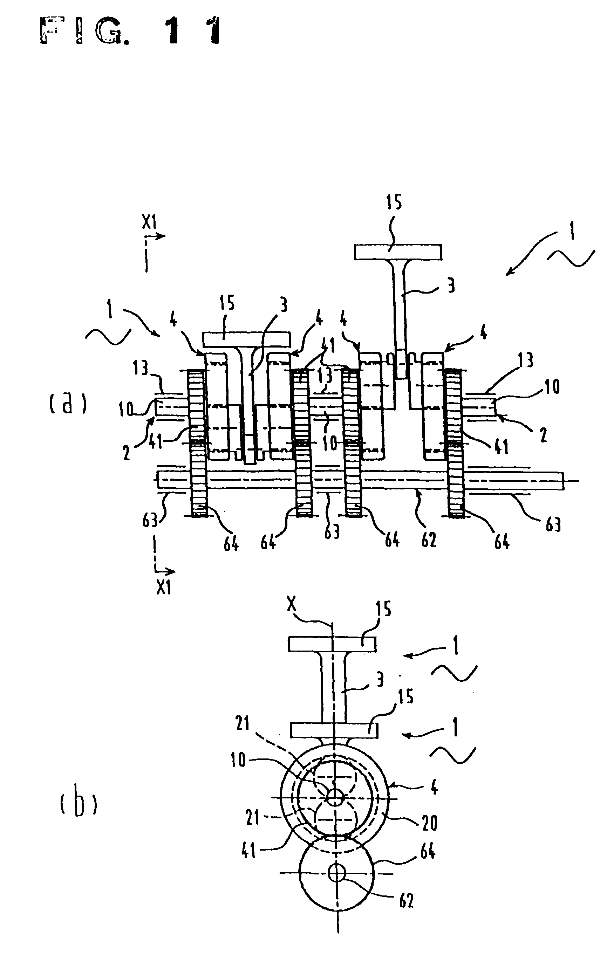

In Fig. 11. two sets of crank devices 1, 1 are arranged in a row so as to form a straight two-cylinder engine.

Actually, the crank devices 1, 1 which have been arranged in a V-shaped configuration are arranged vertically in a row. The remaining construction and operation are similar to those in Figure 10.

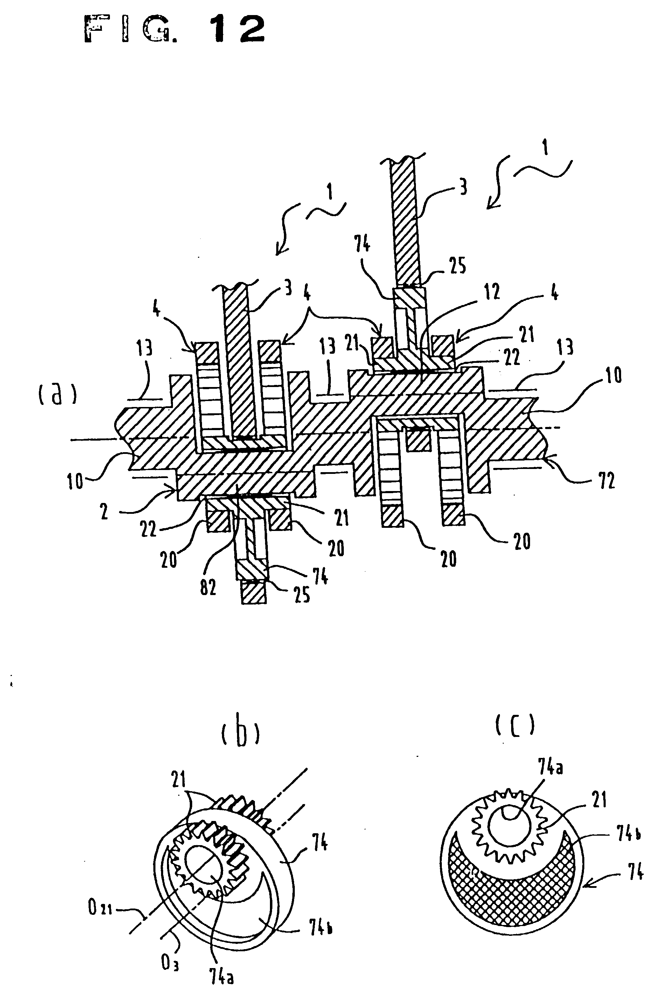

In Fig. 12. shows a modified straight engine. Actually, the output shaft 62 of the straight construction of Figure 12 has been eliminated. A common crankshaft 72 is employed for the crank device 1, 1, ... .

Specifically, and as shown in Fig. 12(b), a common gear pin 74 of a cylindrical shape having a larger diameter is provided for a pair of adjacently disposed planetary gears 21, 21. A crank pin 82 having the principal axis O21 of the crankshaft 72 is passed through and supported by a hollow aperture 74a extending through the planetary gears 21 and the gear pin 74.

In this regard, and as shown in Fig. 12(c), the gear pin 74 is formed with a recessed portion 74b leaving out the boss portion around the hollow aperture 74a, so as to reduce the weight of the gear pin 74.

Although only the two sets of crank devices 1, 1 are shown in the drawings, three or more sets of crank devices may be provided depending upon a particular application.

The remaining construction and operation is similar to those in Figure 11.

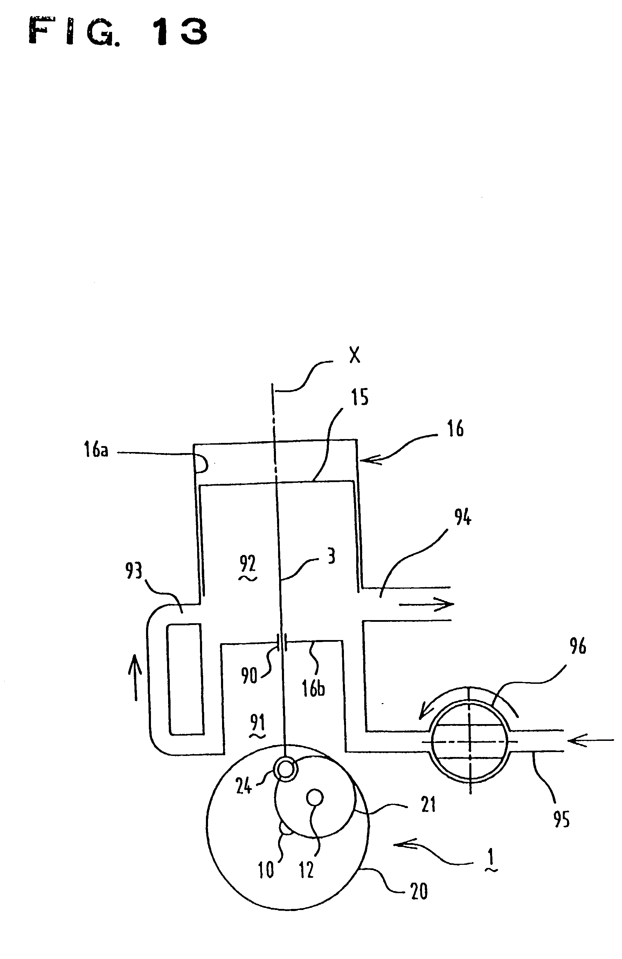

Fig. 13. shows a two-cycle engine including the crank device 1 according to Figure 1.

In this engine, the bottom portion 16b of a cylinder 16 is completely sealed by means of a seal 90, utilizing the fact that a con'rod 3 is moved in linear fashion along the axis X of the cylindrical inner surface 16a of the cylinder, so that a pressure chamber 92 which is completely separated from a crank chamber 91 is defined below a piston 15. In this regard, the con'rod 3 has a cross-section of a desired configuration, circular shape for example, in order to facilitate sealing procedure thereof.

Reference numerals 93 and 94 designate a scavenger port and an exhaust port, respectively, to be opened and closed by the upward and downward movement of the piston 15. Reference numeral 95 designates an intake pipe. The intake pipe 95 is controlled by a rotary valve 96 to be opened and closed. The rotary valve 96 is connected to the main shaft 10 of a crankcase 2 for rotatable movement, so as to be opened and closed in synchronous with the reciprocal movement of the piston 15.

As the piston 15 is moved downwardly, a quantity of fuel-air mixture having been withdrawn into the pressure chamber 92 through the intake pipe 95 is pressurized. When the piston 15 is moved downwardly adjacent to the bottom dead center, the exhaust port 94 and the scavenger port 93 are opened, so that a scavenging operation by means of the fuel-air mixture within the pressure chamber 92 is initiated.

The remaining construction and operation of this embodiment are similar to those in the conventional known two-cycle engine.

In the arrangement of Figure 13, the con'rod 3 is moved linearly without causing any oscillation or sideward or lateral movement, so that the pressure chamber 92 of a small volume may be formed below the cylinder 16. By this, it is possible for the pressure chamber to be significantly reduced in its volume, as compared with conventional one, so as to obtain an increased compression ratio. As the result, it is possible to use a high primary pressure so as to effect efficient scavenging operation, whereby the characteristics of the two-cycle engine may be significantly improved over prior art.

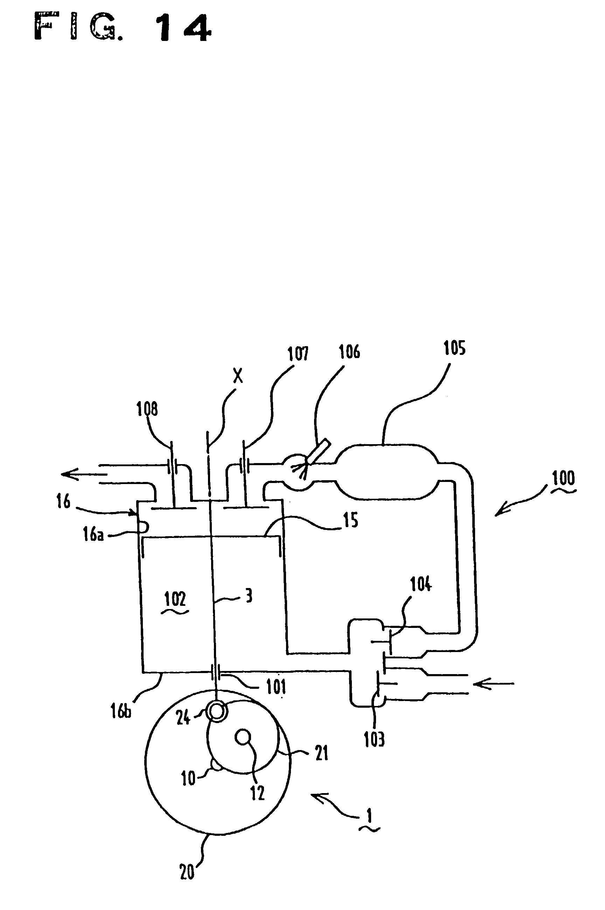

Fig. 14. shows a four-cycle engine including a crank device 1. The engine also includes a mechanical supercharger 100.

In this engine, as in the case of Figure 13, the bottom portion 16b of the a cylinder 16 is completely sealed by means of a seal 101, utilizing the fact that a con'rod 3 is moved linearly along the axis X of a cylindrical inner surface 16a of the cylinder 16, so that a pressure chamber 102 is defined below a piston 15. The pressure chamber 102 cooperates with the piston 15 to constitute a compressor for the supercharger 100.

Reference numeral 103 designates a check valve for intake operation, 104 a check valve for supercharging, 105 an air chamber, 106 a fuel injection nozzle, 107 an intake valve, and 108 an exhaust valve.

A quantity of air having been withdrawn through the check valve 103 for intake operation, due to the reduction in volume of the pressure chamber 102 in accordance with the downward movement of the piston 15, is compressed and supplied from the check valve 104 for supercharging into the air chamber 105. Then, the quantity of air is mixed with a quantity of fuel from the fuel injection nozzle 106 and supplied from the intake valve 107 into a combustion chamber defined in the upper portion of the cylinder 16, so as to effect a supercharging operation.

The remaining construction and operation are similar to those in a conventional known supercharger and four-cycle engine.

It is possible to constitute a compressor by utilizing the particular construction of the crank device 1, without using an external drive source as is used in prior art. Accordingly, it is possible to provide a four-cycle engine including a mechanical supercharger of a small size and a simple construction.

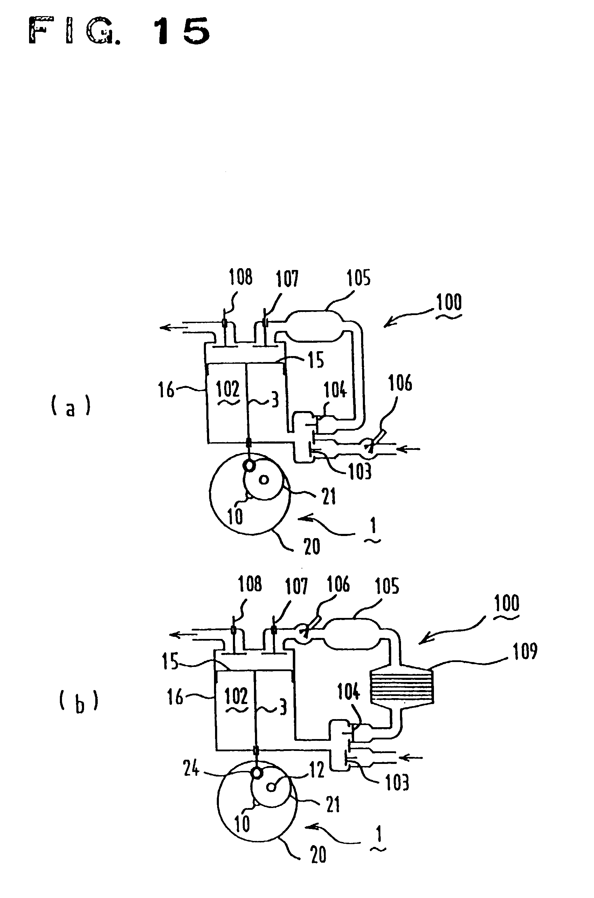

Actual construction for the supercharger 100 may be modified in various ways as in the prior art supercharger. For example and as shown in Fig. 15(a), it is possible for the fuel injection nozzle 106 to be disposed upstream of the check valve 103 for intake operation, so as to cause a quantity of fuel-air mixture to be pressurized by means of a compressor. It is also possible to provide a intercooler 109, as shown in Fig. 15(b), so as to reduce the temperature of the inlet air after pressurization.

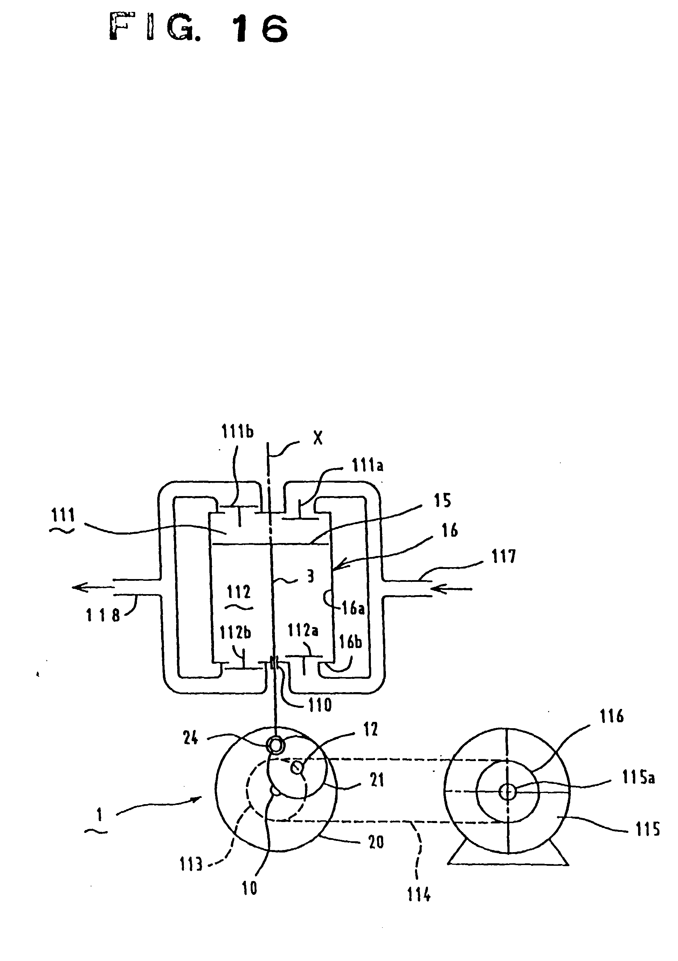

The arrangement of Fig. 16. constitutes a reciprocating single-cylinder compressor provided with a crank device 1.

In this compressor, a con'rod 3 is protruded outwardly from the bottom portion 16b of a cylinder 16 sealed from the exterior through a seal 110, also utilizing the fact that the con'rod 3 is moved linearly along the axis X of the cylindrical inner surface 16a of the cylinder 16, so as to form cylinder chambers 111, 112 on opposite sides of a piston 5, respectively.

A driven pulley 113 is connected to the main shaft 10 of a crankshaft 2. The driven pulley 113 is drivingly connected, through a drive belt 114, with a drive pulley 116 attached to a drive shaft 115a of a drive motor 115.

The upper and lower cylinder chambers 111, 112 are provided with inlet valves 111a, 112a, and discharge valve 111b, 112b, respectively. The cylinder chambers 111, 112 are connected, through the inlet valves 111a, 112a and the discharge valves 111b, 112b, respectively, with a inlet pipe 117 and a discharge pipes 118, respectively.

As the lower cylinder chamber 112 is reduced in its volume in accordance with the downward movement of the piston 15, the air having been introduced into the lower cylinder chamber 112 is compressed and discharged from the discharge valve 112b into the discharge pipe 118. At the same time, a quantity of air is introduced from the inlet pipe 117, through the inlet valve 111a, into the upper cylinder chamber 111. Subsequently, operation contrary to the above is conducted within the upper and lower cylinder chambers 111, 112, in accordance with the upward movement of the piston 15.

In this construction of a two-cylinder chamber, which is not possible in prior art reciprocating, single cylinder compressor, may be employed, so that operation efficiency close to that in a conventional two-cylinder compressor is realized.

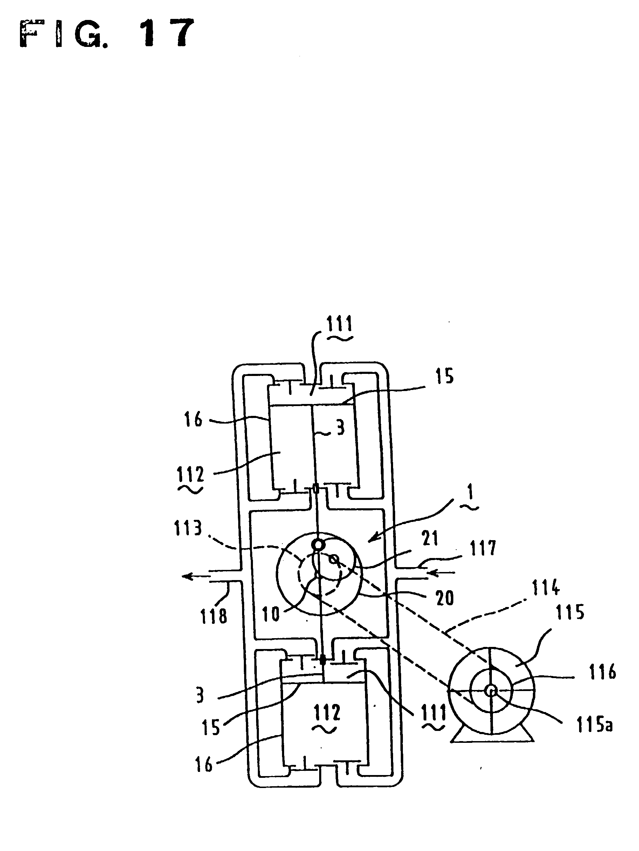

The arrangement of fig. 17. constitutes a two-cylinder compressor. This compressor includes two upper and lower sets of single-cylinder compressors according to Figure 16 disposed on opposite sides of a crankshaft 2.

Specifically, the illustrated compressor is so constructed that a pair of upper and lower pistons 15, 15 are reciprocally driven by means of a single drive motor 115.

The remaining construction and operation of this embodiment are similar to those in Figure 16.

An embodiment of the invention is shown in Fig. 18. This embodiment constitutes a high-pressure, fixed displacement pump, actually, a fuel injection pump for a diesel engine.

This embodiment is obtained by modifying the crank device 1, so that the circumferential engagement position between the planetary gear 21 and the sun gear 20 is adjustably changed. Further, the reciprocal stroke S of a plunger 121 pivotably connected through a pivot pin 120 to one end 3b of the con'rod 3 is made to be adjustable.

Specifically, an internal gear 20 is mounted, through a rotatable operating portion 122, on a crankcase 14 for rotatable movement in the circumferential direction. An operating lever 122a of the rotatable operating portion 122 may be rotated by means of a drive mechanism (not shown).

Appropriate pivotal operation of the operating lever 122a permits adjustment of the circumferential engagement position between the sun gear 20a of the internal gear 20 and the planetary gear 21. The circumferential engagement position may be adjusted between the maximum stroke Smax shown in Fig. 18(b) and the minimum stroke Smin shown in Fig. 18(c).

A pressure chamber 124 of a plunger barrel 123 is in communication with a supply pipe 125 and injection pipe 126 through a suction valve 125a and a discharge valve 126a, respectively.

The main shaft 10 of the crankshaft 2 is drivingly connected with a crankshaft of a diesel engine (not shown). In a four-cycle engine, for example, the main shaft 10 is rotatably driven at a rotational speed one half of that of the crankshaft of the diesel engine.

In the thus constructed fuel injection pump, a rotation of the crankshaft 2 which is one half of the rotation of the engine causes the plunger 121 to be reciprocated a predetermined reciprocal stroke S. By this, a quantity of fuel having been withdrawn from the supply pipe 125 is compressed. The fuel having been pressurized above a predetermined high pressure is pumped from the discharge pipe 126a into the injection pipe 126, so as to be ejected into the fuel chamber from the injection nozzle (not shown).

According to the illustrated embodiment, and unlike fuel injection pumps provided with a conventional cam/roller mechanism, the plunger 121 is constantly connected with the crankshaft 2 over the entire reciprocal stroke S. Thus, any noise caused by the cam putting on the roller as experienced in prior art is prevented. Accordingly, disadvantageous noisy sound peculiar to a diesel engine may be eliminated. The engine may be operated continuously and smooth over a range from low engine speed to high engine speed. High operational accuracy may be also obtained.

Many changes or modifications may be made without departing from the scope of the invention.

With regard to the engine provided with the crank device(s) according to the invention, for example, the number of the cylinders is not limited but may be Increased or decreased depending upon a particular application. The invention may be applied to any kind of cylinders conventionally known to the public, such as a straight type, a horizontal, opposed type, vertical type, or a star type, depending upon particular application or object.

The invention may also be applied to any conventional machinery, other than those illustrated in the drawings, in which conversion between reciprocating motion and rotating motion is conducted.

As explained in detail above, the crank device according to the invention comprises a crankshaft connected to the rotating side, a connecting rod connected to the reciprocating side, and a planetary mechanism provided between the crankshaft and the connecting rod. The planetary mechanism includes a sun member arranged in concentric with the rotational center of the crankshaft, and a planetary member rolling along the inner periphery of the sun gear. The outer diameter of the planetary gear is designed to be one half of the inner diameter of the sun gear. A crank pin of the crankshaft is pivotably connected to the rotational center of the planetary member for rotatable movement. One end of the connecting rod is pivotably connected to the outer portion of the planetary member for rotatable movement. The mass distribution among the constructive members is selected so that the dynamic balance between the reciprocating portion and the rotating portion is obtained. In the crank device and machinery in which the crank device is utilized, below mentioned advantages may be obtained. Thus, the present invention provides a device which presents increased power transmission efficiency and dynamic balance, which is capable of converting reciprocating motion into rotating motion, or vice versa, and which is of simple and compact construction.

(1) In accordance with the present invention, the sun member of the planetary mechanism is arranged in concentric with the rotational center of the crankshaft. The crank pin of the crankshaft is pivotably and rotatably connected to the rotational center of the planetary member which rolls along the inner periphery of the sun gear. One end of the connecting rod is pivotably and rotatably connected to the outer peripheral portion of the planetary member. Thus, the connecting rod does not oscillate or move laterally in substance, so that it is moved, together with the piston, substantially along a linear line in which the piston is reciprocated. Accordingly, stable dynamic balance is maintained. As the result, vibrations or noises caused mainly from unbalanced inertial force of the moving portions in prior art may be significantly reduced.

(2) As mentioned earlier, the con'rod does not oscillated in substance, and is moved substantially along a straight line in which the piston is reciprocated. Thus, substantially no thrust force due to gas pressure and inertial force is applied to the piston. Specifically, no piston slap is caused in substance. This also contributes to the significant elimination of hindrances such as vibrations, noises, cavitation, friction losses, etc.

It is particularly noted that the length of the crank arm of the crankshaft is designed to be equal to the distance from the rotational center of the planetary member to the connection point on the connecting rod. The connection point is adapted to be moved along a straight line passing through the rotational center of the crankshaft, in accordance with the rolling and rotation of the planetary member. Thus, no oscillation is caused to the connecting rod, so that the connecting rod does not move laterally at all. Thus, thrust force otherwise acting on the piston is completely prevented, so that stable and reliable operation of the engine is assured not only in the range of low engine speeds, but also in the range of high engine speeds.

(3) Superior dynamic balance may be easily obtained, as compared with crank devices in the prior art. Theoretically, it is possible to obtain complete dynamic balance in a range of engine speeds higher than that may be obtained in prior art.

(4) Since the connecting rod does not oscillate or is not moved laterally, theoretically no bending force is applied to the connecting rod. Thus, significantly thin connecting rod may be formed as compared with prior art connecting rod, even when considering influence from the peripheral parts. Since no thrust force is applied to the piston, frictional force is significantly reduced. The piston per se may be formed from a circular plate having a reduced thickness. This also contributes to the reduction in weight of the reciprocating portion.

It is also noted that an unbalanced load is significantly reduced which might be caused from unbalance and inertial force of the moving portion. Strictly high mechanical strength and rigidity as required in prior art are not required. This also contributes to the reduction in thickness of the crankshaft over prior art, so that the weight of rotating portion may be reduced.

Accordingly, total weight of the device may be significantly reduced. This permits, together with the superior dynamic balance, provision of a construction optimum to high speed operation.

(5) The planetary member is so arranged to encircle the sun member, so that rotational, inertial force from the planetary member may be surely received by the sun member. This also contributes to maintaining stable dynamic balance, as well as closely engaged state between the planetary member and the sun member, thus avoiding ineffective motion. Accordingly, power transmission efficiency is increased and fuel consumption is significantly improved.

(6) The mass distribution among the constructive members is selected considering the dynamic balance about the rotational center of the crankshaft, so that uniform and stable operation may be obtained in a wide range from low speed to high speed output. Particularly remarkable advantages may be obtained, when all of the counter balances for the constructive members are designed so as to exert a rotational, inertial force.

**Claims**

1. A crank device (1) for converting a reciprocating motion into a rotating motion, or vice versa, comprising:

   a crankshaft (2) connected to the rotating side;
   a connecting rod (3) connected to the reciprocating side; and
   a planetary mechanism (4) disposed between the crankshaft (2) and the connecting rod (3);
   said planetary mechanism (4) including a sun member (20a) arranged concentrically with the rotational centre (02) of said crankshaft (2), and a planetary member (21) rolling along the inner periphery of said sun member (20a);
   the outer diameter of said planetary member being selected to be one half of the inner diameter of said sun member;
   a crank pin (12) of said crankshaft (2) being pivotably and rotatably connected to the rotational centre ($O_{21}$) of said planetary member (21);
   one end of said connecting rod (3) being pivotably and rotatably connected to the outer peripheral portion of said planetary member (21);
   the mass distribution among said constructive members being selected so that the dynamic balance between the reciprocating portion and the rotating portion is obtained;

   characterised in that the circumferential engagement position between said planetary member (21) and said sun member (20a) is adjustable.

2. A crank device (1) according to Claim 1, wherein the length ($L_1$) of a crank arm of said crankshaft (2) is selected to be equal to the distance ($L_2$) from the centre of rotation ($O_{21}$) of said planetary member (21) to the connection point ($O_3$) on said connecting rod (3) and wherein said connection point ($O_3$) is adapted to be moved along a straight line passing through the centre of rotation of said crankshaft (2), in response to the rolling motion of said planetary member (21).

3. A crank device (1) according to Claim 1 or 2, wherein the mass distribution among said constructive members is determined, considering the dynamic balance about the centre of rotation ($O_2$) of said crankshaft (2).

4. A crank device (1) according to Claim 3, wherein the mass distribution regarding the opposite sides of the centre of rotation (021) of said planetary member (21) is balanced, and wherein the mass distribution regarding the opposite sides of the centre of rotation ($O_2$) of said crankshaft (2) is balanced.

5. A crank device (1) according to any of said previous claims, wherein the cylindrical inner periphery of said sun member (20a) and the cylindrical outer periphery of said planetary member (21) are frictionally engaged without relative slippage therebetween.

6. A crank device (1) according to any one of claims 1 to 4, wherein the cylindrical inner periphery of said sun member (20a) and the cylindrical outer periphery of said planetary member (21) are inter-engaged.

7. A crank device (1) according to Claim 6, wherein said sun member (20a) is formed as an internal gear (20) having engagement teeth in the cylindrical inner periphery thereof, and wherein said planetary member (21) is formed as a planetary gear in mesh with said internal gear (20).

8. A crank device (1) according to Claim 6, wherein said cylindrical inner periphery of said sun member (20a) is provided with a chain extending over entire circumferential length thereof, and wherein said planetary member (21) is formed a s a sprocket wheel in mesh with said chain.

9. A crank device (1) according to Claim 6, wherein said cylindrical inner periphery of said sun member (20a) is provided with a toothed belt extended over entire circumferential length thereof, and wherein said planetary member (21) is formed as a pulley in mesh with said toothed belt.

10. Machinery comprising at least one set of the crank device (1) according to any one of the Claims 1 through 9, wherein the other end of said connecting rod (3) is connected to the reciprocating portion constituting the input side, and wherein the main shaft of said crankshaft (2) is connected to the rotating portion constituting the output side.

11. Machinery comprising at least one set of the crank device (1) according to any one of the Claims 1 through 9, wherein the main shaft of said crankshaft (2) is connected to the rotating portion constituting the input side, and wherein the opposite end of said connecting rod (3) is connected to the reciprocating portion constituting the output side.

12. Machinery according to Claim 10 or Claim 11, wherein:

said reciprocating portion is a piston (15) of a reciprocating cylinder device (5);
the length of a crank arm (11) of said crankshaft (2) is selected to be equal to the distance from the centre of rotation ($O_{21}$) of said planetary member (21) to the connection point on said connecting rod (3);
said connection point is adapted to be moved along a straight line passing through the centre of rotation ($O_2$) of said crankshaft (2) in the direction of reciprocating motion of said piston (15), in response to the rolling movement of said planetary member (21).

13. Machinery according to Claim 12, wherein said piston (15) and the opposite end of said connecting rod (3) are fixedly connected.

14. Machinery according to Claim 10 or Claim 11, wherein the connection point between said planetary member (21) and said connecting rod (3) is adapted to be moved along a straight line passing through a point adjacent to the centre of rotation ($O_2$) of said crankshaft (2) in the direction of reciprocating motion of said piston (15), in response to the rolling movement of said planetary member (21).

15. Machinery according to Claim 14, wherein said piston (15) and the opposite end of said connecting rod (3) is pivotably connected.

**Patentansprüche**

1. Kurbelvorrichtung (1) zur Umwandlung einer Hin- und Herbewegung in eine Rotationsbewegung, oder umgekehrt, aufweisend:

eine Kurbelwelle (2), die mit der rotierenden Seite verbunden ist;

eine Verbindungsstange (3), die mit der hin- und hergehenden Seite verbunden ist; und

einen Planetenmechanismus (4), der zwischen der Kurbelwelle (2) und der Verbindungsstange (3) angeordnet ist;

wobei der Planetenmechanismus (4) ein Sonnenelement (20a) umfaßt, das konzentrisch zu dem Rotationszentrum ($O_2$) der Kurbelwelle (2) angeordnet ist, und ein Planetenelement (21) umfaßt, das längs des inneren Umfangs des Sonnenelements (20a) abrollt;

wobei der äußere Durchmesser des Planetenelements so ausgewählt ist, daß er gleich der Hälfte des inneren Durchmessers des Sonnenelements ist;

wobei ein Kurbelwellenzapfen (12) der Kurbelwelle (2) mit dem Rotationszentrum ($O_{21}$) des Planetenelements (21) schwenkbar und rotierbar verbunden ist;

wobei ein Ende der Verbindungsstange (3) mit dem äußeren Umfangsbereich des Planetenelements (21) schwenkbar und rotierbar verbunden ist;

wobei die Massenverteilung zwischen den Konstruktionselementen so ausgewählt ist, daß das dynamische Gleichgewicht zwischen dem hin- und hergehenden Bereich und dem rotierenden Bereich erhalten wird;

dadurch gekennzeichnet, daß die Umfangseingriffsposition zwischen dem Planetenelement (21) und dem Sonnenelement (20a) einstellbar ist.

2. Kurbelvorrichtung (1) gemäß Anspruch 1, wobei die Länge ($L_1$) eines Kurbelarms der Kurbelwelle (2) so ausgewählt ist, daß sie gleich der Entfernung ($L_2$) von dem Rotationszentrum ($O_{21}$) des Planetenelements (21) bis zu dem Verbindungspunkt ($O_3$) auf der Verbindungsstange (3) ist, und wobei der Verbindungspunkt ($O_3$) ausgelegt ist, um als Reaktion auf die Abrollbewegung des Planetenelements (21) längs einer geraden Linie, die durch das Rotationszentrum der Kurbelwelle (2) hindurchgeht, bewegt zu werden.

3. Kurbelvorrichtung (1) gemäß Anspruch 1 oder 2, wobei die Massenverteilung zwischen den Konstruktionselementen unter Berücksichtigung des dynamischen Gleichgewichts um das Rotationszentrum ($O_2$) der Kurbelwelle (2) bestimmt wird.

4. Kurbelvorrichtung (1) gemäß Anspruch 3, wobei die Massenverteilung bezüglich der entgegengesetzten Seiten des Rotationszentrums ($O_{21}$) des Planetenelements (21) im Gleichgewicht ist, und wobei die Massenverteilung bezüglich der entgegengesetzten Seiten des Rotationszentrums ($O_2$) der Kurbelwelle (2) im Gleichgewicht ist.

5. Kurbelvorrichtung (1) gemäß irgendeinem der vorhergehenden Ansprüche, wobei der zylindrische innere Umfang des Sonnenelements (20a) und der zylindrische äußere Umfang des Planetenelements (21) durch Reibung ineinander eingreifen, ohne relatives Rutschen dazwischen.

6. Kurbelvorrichtung (1) gemäß irgendeinem der Ansprüche 1 bis 4, wobei der zylindrische innere Umfang des Sonnenelements (20a), und der zylindrische äußere Umfang des Planetenelements (21) ineinander eingreifen.

7. Kurbelvorrichtung (1) gemäß Anspruch 6, wobei das Sonnenelement (20a) als ein Innenzahnrad (20), das in dem zylindrischen inneren Umfang Eingriffszähne hat, gebildet ist, und wobei das Planetenelement (21) als ein Planetenzahnrad gebildet ist, das im Eingriff mit dem Innenzahnrad (20) ist.

8. Kurbelvorrichtung (1) gemäß Anspruch 6, wobei der zylindrische innere Umfang des Sonnenelements (20a) mit einer Kette versehen ist, die sich über die gesamte Umfangslänge erstreckt, und wobei des Planetenelement (21) als ein Kettenrad gebildet ist, das im Eingriff mit der Kette ist.

9. Kurbelvorrichtung (1) gemäß Anspruch 6, wobei der zylindrische innere Umfang des Sonnenelements (20a) mit einem Zahnriemen versehen ist, der sich über die gesamte Umfangslänge erstreckt, und wobei das Planetenelement (21) als eine Riemenscheibe, die im Eingriff mit dem Zahnriemen ist, gebildet ist.

10. Maschine, die mindestens einen Satz der Kurbelvorrichtung (1) gemäß irgendeinem der Ansprüche 1 bis 9 aufweist, wobei das andere Ende der Verbindungsstange (3) mit dem hin- und hergehenden Bereich, der die Eingangsseite bildet, verbunden ist, und wobei die Hauptwelle der Kurbelwelle (2) mit dem rotierenden Bereich, der die Ausgangsseite bildet, verbunden ist.

11. Maschine, die mindestens einen Satz der Kurbelvorrichtung (1) gemäß irgendeinem der Ansprüche 1 bis 9 aufweist, wobei die Hauptwelle der Kurbelwelle (2) mit dem rotierenden Bereich, der die Eingangsseite bildet, verbunden ist, und wobei das entgegengesetzte Ende der Verbindungsstange (3) mit dem hin- und hergehenden Bereich, der die Ausgangsseite bildet, verbunden ist.

12. Maschine gemäß Anspruch 10 oder Anspruch 11, wobei:

der hin- und hergehende Bereich ein Kolben (15) einer hin- und hergehenden Zylindervorrichtung (5) ist;

die Länge eines Kurbelarms (11) der Kurbelwelle (2) so ausgewählt ist, daß sie gleich der Entfernung von dem Rotationszentrum ($O_{21}$) des Planetenelements (21) bis zu dem Verbindungspunkt auf der Verbindungsstange (3) ist;

wobei der Verbindungspunkt ausgelegt ist, um als Reaktion auf die Abrollbewegung des Planetenelements (21) längs einer geraden Linie, die durch das Rotationszentrum ($O_2$) der Kurbelwelle (2) hindurchgeht, in der Richtung der Hin- und Herbewegung des Kolbens (15) bewegt zu werden.

13. Maschine gemäß Anspruch 12, wobei der Kolben (15) und das entgegengesetzte Ende der Verbindungsstange (3) starr miteinander verbunden sind.

14. Maschine gemäß Anspruch 10 oder Anspruch 11, wobei der Verbindungspunkt zwischen dem Planetenelement (21) und der Verbindungsstange (3) ausgelegt ist, um als Reaktion auf die Abrollbewegung des Planetenelements (21) längs einer geraden Linie, die durch einen an das Rotationszentrum ($O_2$) der Kurbelwelle (2) angrenzenden Punkt hindurchgeht, in der Richtung der Hin- und Herbewegung des Kolbens (15) bewegt zu werden.

15. Maschine gemäß Anspruch 14, wobei der Kolben (15) und das entgegengesetzte Ende der Verbindungsstange (3) schwenkbar miteinander verbunden sind.

## Revendications

1. Dispositif à manivelle (1) destiné à convertir un mouvement de va-et-vient en un mouvement de rotation, ou vice-versa, comprenant:

un vilebrequin (2) relié au côté rotatif;
une bielle (3) reliée au côté à mouvement de va-et-vient; et
un mécanisme planétaire (4) disposé entre le vilebrequin (2) et la bielle (3);
ledit mécanisme planétaire (4) comportant un élément solaire (20a) disposé concentriquement avec le centre de rotation ($O_2$) dudit vilebrequin (2), et un élément planétaire (21) roulant le long de la périphérie intérieure dudit élément solaire (20a);
le diamètre extérieur dudit élément planétaire étant sélectionné de façon à être égal à la moitié du diamètre intérieur dudit élément solaire;

un maneton (12) dudit vilebrequin (2) étant relié de façon pivotante et mobile en rotation au centre de rotation ($O_{21}$) dudit élément planétaire (21);

une extrémité de ladite bielle (3) étant reliée de façon pivotante et mobile en rotation à la partie périphérique extérieure dudit élément planétaire (21);

la distribution massique parmi lesdits éléments de construction étant sélectionnée de manière à obtenir l'équilibre dynamique entre la partie se déplaçant avec un mouvement de va-et-vient et la partie rotative;

caractérisé en ce que la position d'engrènement circonférentielle entre ledit élément planétaire (21) et ledit élément solaire (20a) est réglable.

2. Dispositif à manivelle (1) selon la revendication 1, dans lequel la longueur ($L_1$) d'un bras à manivelle dudit vilebrequin (2) est sélectionnée de façon à être égale à la distance ($L_2$) du centre de rotation ($O_{21}$) dudit élément planétaire (21) au point de connexion ($O_3$) sur ladite bielle (3), et dans lequel ledit point de connexion ($O_3$) est conçu pour être déplacé le long d'une ligne droite passant par le centre de rotation dudit vilebrequin (2), en réponse au mouvement de roulement dudit élément planétaire (21).

3. Dispositif à manivelle (1) selon la revendication 1 ou 2, dans lequel la distribution massique parmi lesdits éléments de construction est déterminée en tenant compte de l'équilibre dynamique par rapport au centre de rotation ($O_2$) dudit vilebrequin (2).

4. Dispositif à manivelle (1) selon la revendication 3, dans lequel la distribution massique concernant les côtés opposés du centre de rotation ($O_{21}$) dudit élément planétaire (21) est équilibrée, et dans lequel la distribution massique concernant les côtés opposés du centre de rotation ($O_2$) dudit vilebrequin (2) est équilibrée.

5. Dispositif à manivelle (1) selon l'une quelconque desdites revendications précédentes, dans lequel la périphérie intérieure cylindrique dudit élément solaire (20a) et la périphérie extérieure cylindrique dudit élément planétaire (21) sont en contact frottant sans glissement relatif entre elles.

6. Dispositif à manivelle (1) selon l'une quelconque des revendications 1 à 4, dans lequel la périphérie intérieure cylindrique dudit élément solaire (20a) et la périphérie extérieure cylindrique dudit élément planétaire (21) s'engrènent.

7. Dispositif à manivelle (1) selon la revendication 6, dans lequel ledit élément solaire (20a) a la forme d'un engrenage interne (20) possédant des dents d'engrènement dans sa périphérie intérieure cylindrique, et dans lequel ledit élément planétaire (21) a la forme d'un engrenage planétaire s'engrenant avec ledit engrenage interne (20).

8. Dispositif à manivelle (1) selon la revendication 6, dans lequel ladite périphérie intérieure cylindrique dudit élément solaire (20a) est pourvue d'une chaîne s'étendant sur toute sa longueur circonférentielle, et dans lequel ledit élément planétaire (21) a la forme d'un pignon denté s'engrenant avec ladite chaîne.

9. Dispositif à manivelle (1) selon la revendication 6, dans lequel ladite périphérie intérieure cylindrique dudit élément solaire (20a) est pourvue d'une courroie dentée s'étendant sur toute sa longueur circonférentielle, et dans lequel ledit élément planétaire (21) a la forme d'une poulie s'engrenant avec ladite courroie dentée.

10. Machine comprenant au moins un jeu de dispositifs à manivelle (1) selon l'une quelconque des revendications 1 à 9, dans laquelle l'autre extrémité de ladite bielle (3) est reliée à la partie se déplaçant avec un mouvement de va-et-vient constituant le côté d'entrée, et dans laquelle l'arbre principal dudit vilebrequin (2) est relié à la partie rotative constituant le côté de sortie.

11. Machine comprenant au moins un jeu de dispositifs à manivelle (1) selon l'une quelconque des revendications 1 à 9, dans laquelle l'arbre principal dudit vilebrequin (2) est relié à la partie rotative constituant le côté d'entrée, et dans lequel l'extrémité opposée de ladite bielle (3) est reliée à la partie se déplaçant avec un mouvement de va-et-vient constituant le côté de sortie.

12. Machine selon la revendication 10 ou la revendication 11, dans laquelle:

ladite partie se déplaçant avec un mouvement de va-et-vient est un piston (15) d'un dispositif formant cylindre (5) se déplaçant avec un mouvement de va-et-vient;

la longueur d'un bras à manivelle (11) dudit vilebrequin (2) est sélectionnée de façon à être égale à la distance du centre de rotation ($O_{21}$) dudit élément planétaire (21) au point de connexion sur ladite bielle (3);

ledit point de connexion est conçu pour être déplacé le long d'une ligne droite passant par le centre de rotation ($O_2$) dudit vilebrequin (2) dans la direction du déplacement en va-et-vient dudit piston (15), en réponse au mouvement de roulement dudit élément planétaire (21).

13. Machine selon la revendication 12, dans laquelle ledit piston (15) et l'extrémité opposée de ladite bielle (3) sont reliés de façon fixe.

14. Machine selon la revendication 10 ou la revendication 11, dans laquelle le point de connexion entre ledit élément planétaire (21) et ladite bielle (3) est conçu pour être déplacé le long d'une ligne droite passant par un point adjacent au centre de rotation ($O_2$) dudit vilebrequin (2) dans la direction du déplacement en va-et-vient dudit piston (15), en réponse au mouvement de roulement dudit élément planétaire (21).

15. Machine selon la revendication 14, dans laquelle ledit piston (15) et l'extrémité opposée de ladite bielle (3) sont reliés de façon pivotante.

# FIG. 1

# FIG. 2

# FIG. 3

# FIG. 4

# FIG. 5

EP 0 708 274 B1

# FIG. 6

# F I G. 7

piston stroke (s)

angle of rotation of crankshaft (∅:phi)

# FIG. 8

(a)

(b)

# FIG. 9

(a)

(b)

# FIG. 10

(a)

(b)        (c)

# FIG. 11

(a)

(b)

# FIG. 12

(a)

(b)

(c)

# FIG. 13

# FIG. 14

# FIG. 15

( a )

( b )

# FIG. 16

# FIG. 17

# FIG. 18

# FIG. 19

# FIG. 20

top dead center

stroke

bottom dead center

stroke

a

b

h

θ

c

e

g

d

f

R

P

F